# EUROPÄISCHE PATENTANMELDUNG

(11) **EP 2 878 831 A1**
(43) Veröffentlichungstag der Anmeldung: **03.06.2015**
(21) Anmeldenummer: 14003591.6
(22) Anmeldetag: 21.10.2014
(51) Int. Cl.: F15B 15/28, G01D 5/02, G01D 5/04, G01D 5/06

(54) **Arbeitszylinder**

(30) Priorität: 07.11.2013 DE 202013010056 U
(71) Anmelder: BÜMACH ENGINEERING INTERNATIONAL B.V., 7826 TA Emmen (NL)
(72) Erfinder: Büter, Josef, D-49733 Haren/Altenberge (DE); Rüther, Dipl.-Ing. (FH), D- 49733 Haren (DE)
(74) Vertreter: Weihrauch, Frank

(57) **Zusammenfassung**

Die vorliegende Erfindung betrifft einen Arbeitszylinder, welcher ein Zylinderrohr (1) mit einem Zylinderrohrinnenraum (2), welcher von einer Zylinderrohrwandung (3) begrenzt wird, sowie eine Kolbeneinheit (4) und eine Positionserkennungsvorrichtung (5) aufweist. Der Arbeitszylinder zeichnet sich dadurch aus, dass die Zylinderrohrwandung (3) eine Durchsetzung (6) aufweist, wobei die Positionserkennungsvorrichtung (5) der Durchsetzung (6) zugeordnet ist, dass die Positionserkennung (5) einen Grundkörper (7), ein Federelement (8), eine Betätigungseinheit (9), aufweisend einen Formkörper (10) und einen Magneten (11), sowie einen Reedschalter (12), aufweist, wobei die Betätigungseinheit (9) mittels des Federelements (8) in dem Grundkörper (7) beweglich angeordnet ist, und wobei in einer Ausgangslage der Betätigungseinheit (8) der Formkörper (10) durch die Durchsetzung (6) abschnittsweise in den Zylinderrohrinnenraum (2) eintritt, dass die Betätigungseinheit (9) durch die Kolbeneinheit (4), bei einem Überfahren der Durchsetzung (6), entgegen der Wirkung des Federelements (8), von der Ausgangslage in eine Arbeitslage bringbar ist, und dass der Reedschalter (12) in der Arbeitslage der Betätigungseinheit (9) einen ersten Schaltzustand und in der Ausgangslage der Betätigungseinheit (9) einen zweiten Schaltzustand aufweist.

## Beschreibung

Die Erfindung betrifft einen Arbeitszylinder, insbesondere einen hydraulischen Arbeitszylinder, mit einer Positionserkennungsvorrichtung zur Erfassung der axialen Lageposition einer Kolbeneinheit.

Aus dem Stand der Technik ist es bereits bekannt, in einem Arbeitszylinder die Lageposition der Kolbenstange, beziehungsweise des Kolbens, zusammengefasst auch als Kolbeneinheit bezeichnet, zu erfassen.

Eine solche Lagepositionserfassung wird beispielsweise durchgeführt, um eine jeweilige Endlage der Kolbeneinheit in dem Zylinderrohr des Arbeitszylinders zu erfassen.

Ferner sind aus dem Stand der Technik entsprechende Positionserkennungsvorrichtungen in Arbeitszylindern bekannt, welche die Lageposition einer Kolbeneinheit mittels eines Reedschalters erfassen.

Derartige Vorrichtungen sehen in der Regel einen entsprechenden Magneten vor, welcher seitlich an der Kolbeneinheit angeordnet ist und durch welchen der Reedschalter, der in oder an dem Zylinderrohr angeordnet ist, betätigt wird.

Der Nachteil einer solchen Positionserkennungsvorrichtung liegt insbesondere darin, dass die Position des Magneten von der Winkellage der Kolbeneinheit in dem Zylinderrohr abhängig ist.

Bei einer möglichen Verdrehung der Kolbeneinheit in dem Zylinderrohr in der Montage oder im Betrieb besteht somit das Problem, dass der Magnet nicht mehr ausreichend nahe an den Reedschalter herangeführt werden kann, um diesen zu betätigen.

Darüber hinaus sind Lösungen bekannt, welche insbesondere eine Endlagenerfassung der Kolbeneinheit mittels sogenannter Näherungssensoren bereitstellen. Die Nachteile dieser Lösungen liegen jedoch in den Bereitstellungskosten der Sensortechnik sowie in einer vergleichsweise aufwändigen Auswertungselektronik.

Die Aufgabe der vorliegenden Erfindung besteht somit darin, die Nachteile des Standes der Technik zu überwinden und einen Arbeitszylinder mit einer Positionserkennungsvorrichtung bereitzustellen, welche eine sichere Erfassung der Lageposition einer Kolbeneinheit unabhängig von deren Winkellage gewährleistet, welche robust aufgebaut ist und welche gleichzeitig einfach und kostengünstig bereitstellbar ist.

Die Aufgabe wird durch einen Arbeitszylinder mit den, im Patentanspruch 1 aufgeführten, Merkmalen gelöst. Bevorzugte Weiterbildungen ergeben sich aus den Unteransprüchen.

Ein erfindungsgemäßer Arbeitszylinder weist im Wesentlichen ein Zylinderrohr mit einem Zylinderrohrinnenraum, welcher von einer Zylinderrohrwandung begrenzt wird, eine Kolbeneinheit sowie eine Positionserkennungsvorrichtung zur Erfassung der Lageposition der Kolbeneinheit in dem Zylinderrohr auf.

Die Positionserkennungsvorrichtung ist hierbei in der Lage, je nach Anwendungsfall und Anordnung der Positionserkennungsvorrichtung, die Lageposition der Kolbeneinheit in einer Endlage oder in einer frei wählbaren Position zwischen den jeweiligen Endlagen zu erfassen.

Der Arbeitszylinder weist ferner je nach Ausführungsform entsprechende Verschlussteile, welche mit dem Zylinderrohr verbunden sind, sowie Druckanschlüsse zum Ein-/Ausbringen eines Druckmediums auf.

Erfindungsgemäß zeichnet sich der Arbeitszylinder dadurch aus, dass die Zylinderrohrwandung eine Durchsetzung aufweist, welcher die Positionserkennungsvorrichtung derart zugeordnet ist, dass die noch näher zu beschreibende Betätigungseinheit der Positionserkennungsvorrichtung in der Durchsetzung zumindest abschnittsweise aufgenommen ist. Der Durchsetzung kann ferner ein entsprechender Flansch auf der Außenwandung des Zylinderrohres zugeordnet sein, durch welchen die Aufnahme der Positionserkennungsvorrichtung optimiert wird.

Die Positionserkennungsvorrichtung eines erfindungsgemäßen Arbeitszylinders weist vorliegend einen Grundkörper, ein Federelement, eine Betätigungseinheit sowie einen Reedschalter auf.

Die Betätigungseinheit weist ferner einen Formkörper und einen Magneten auf, wobei der Magnet dem Formkörper zugeordnet, vorzugsweise mit diesem fest verbunden, ist.

Der generelle Aufbau sowie die Funktionsweise eines Reedschalters werden als dem Fachmann bekannt vorausgesetzt.

Der Grundkörper dient erfindungsgemäß zur Aufnahme der übrigen Komponenten der Positionserkennungsvorrichtung und ist im Bereich der Durchsetzung mit der Zylinderrohraußenwandung, beispielsweise mittels Verschweißen, verbunden.

Die Betätigungseinheit ist erfindungsgemäß in dem Grundkörper mittels des Federelements beweglich angeordnet und dazu in der Lage, zwei unterschiedliche Betriebszustände, nämlich eine Ausgangslage und eine Arbeitslage, einzunehmen.

Die Ausgangslage der Betätigungseinheit stellt in diesem Zusammenhang den Betriebszustand der Positionserkennungsvorrichtung dar, bei welchem die Betätigungseinheit durch die Federkraft des Federelements soweit in Richtung des Zylinderrohrinnenraums verschoben wird, dass der Formkörper durch die Durchsetzung abschnittsweise in den Zylinderrohrinnenraum eintritt.

Die maximale Eintrittstiefe des Formkörpers in den Zylinderrohrinnenraum wird hierbei, beispielsweise durch einen Anschlag, auf ein mechanisch sinnvolles Maß begrenzt und so gewählt, dass der Formkörper bis in den Bewegungsraum der Kolbeneinheit hineinragt.

Von der Ausgangslage ist die Betätigungseinheit durch die Kolbeneinheit in die Arbeitslage bringbar. Dies erfolgt bei einem Überfahren der Durchsetzung durch einen Abschnitt der Kolbeneinheit, beispielsweise einen Kolbenring, wobei der Formkörper durch die Kolbeneinheit aus dem Zylinderrohrinnenraum verdrängt und somit die Betätigungseinheit, entgegen der Wirkung des Federelements, in Richtung des Reedschalters verschoben wird.

Der Formkörper ist hierbei in seiner Geometrie insbesondere so ausgebildet, dass dieser durch die Kolbeneinheit besonders einfach und ohne einen wesentlichen Widerstand verdrängt werden kann.

Je nach Lage der Betätigungseinheit weist der Reedschalter unterschiedliche Schaltzustände auf, wobei der Reedschalter in der Arbeitslage einen ersten Schaltzustand und in der Ausgangslage einen zweiten Schaltzustand einnimmt. Der erste Schaltzustand stellt diesbezüglich den Zustand des Reedschalters dar, in welchem die in dem Reedschalter befindlichen Kontaktzungen beispielsweise verbunden sind und somit der Kontakt geschlossen ist. Dieser Zustand wird auf allgemein bekannte Art und Weise dadurch hergestellt, dass der Magnet der Betätigungseinheit auf die Kontaktzungen einwirkt und diese in einen Berührungskontakt miteinander bringt.

Der zweite Schaltzustand stellt ferner den Zustand des Reedschalters dar, in welchem sich der Magnet der Betätigungseinheit in einem ausreichend großen Abstand zu dem Reedschalter befindet, sodass die Kontaktzungen vorzugsweise voneinander getrennt sind und der Kontakt somit unterbrochen ist. Die erfindungsgemäße Lösung erfasst einen Reedschalter unabhängig davon, ob dieser als Schließer oder Öffner ausgebildet ist.

Ein besonderer technologischer Vorteil des erfindungsgemäßen Arbeitszylinders besteht darin, dass die Kolbeneinheit den Formkörper bei einem Überfahren der Durchsetzung immer und insbesondere unabhängig von deren Winkellage in dem Zylinderrohr verdrängen kann und somit eine Erfassung deren Lageposition der Kolbeneinheit, unabhängig von deren Winkellage in dem Zylinderrohr, durch die Positionserkennungsvorrichtung gewährleistet werden kann.

Der Grundkörper der Positionserkennungsvorrichtung ist besonders vorteilhaft so ausgebildet, dass dieser eine durchdringungsfreie Abtrennung zwischen dem Reedschalter und der Betätigungseinheit bereitstellt, wobei die Abtrennung so ausgebildet ist, dass der Magnet der Betätigungseinheit zuverlässig auf den Reedschalter einwirken kann.

Auf diese Weise wird es als weiterer Vorteil des Arbeitszylinders bewirkt, dass der Reedschalter einschließlich der elektrischen Kontaktierung außerhalb des fluidischen Druckraums des Arbeitszylinders angeordnet ist und somit durch das Fluid an sich sowie durch den Druck des Fluids nicht beschädigt oder beeinträchtigt werden kann.

Des Weiteren ist eine Positionserkennungsvorrichtung eines erfindungsgemäßen Arbeitszylinders zum einen besonders unkompliziert und, insbesondere aufgrund der Verwendung des Reedschalters, kostengünstig bereitstellbar. Zum anderen muss zur Auswertung des, durch den Reedschalter bereitgestellten, Schaltsignals keine aufwändige Auswertungselektronik vorgehalten werden.

In einer besonders vorteilhaften Weiterbildung des Arbeitszylinders ist der Formkörper der Betätigungseinheit als Kugel ausgebildet.

Die Kugel stellt als Formkörper zum einen eine besonders gute Anlauffläche für die Kolbeneinheit dar, so dass der Formkörper durch die Kolbeneinheit besonders einfach und insbesondere ohne eine wesentliche Beeinträchtigung der Bewegung der Kolbeneinheit verdrängt werden kann. Vorzugsweise ist die Kugel drehbar gelagert, so dass das Gleit-, Verschließ- bzw. Verdrängungsverhalten weiter optimiert werden kann.

Zum anderen ist ein als Kugel ausgebildeter Formkörper besonders kostengünstig bereitstellbar, wodurch insgesamt die Bereitstellungskosten für einen erfindungsgemäßen Arbeitszylinder niedrig gehalten werden können.

Eine weitere vorteilhafte Weiterbildung des Arbeitszylinders sieht vor, dass der Magnet der Betätigungseinheit als integraler Bestandteil des Formkörpers ausgebildet ist.

Hierbei ist es beispielsweise möglich, dass der Formkörper selbst aus einem magnetischen Material besteht und somit als Magnet wirkt.

In einer abgewandelten Variante dieser Weiterbildung ist es erfindungsgemäß ebenfalls möglich, dass ein, dem Reedschalter zugewandter, Abschnitt des Formkörpers als Magnet ausgebildet ist.

Die Kolbeneinheit eines erfindungsgemäßen Arbeitszylinders weist in einer bevorzugten Weiterbildung einen Kolben und eine Kolbenstange auf.

In dieser Weiterbildung bildet der Kolben den Teil der Kolbeneinheit, welcher bei einem Überfahren der Durchsetzung der Zylinderrohrwandung den Formkörper der Betätigungseinheit verdrängt, wodurch der Reedschalter betätigt wird. Je nach axialer Lage der Positionserkennungsvorrichtung kann nach dem Ende des Überfahrens die Betätigungseinheit wieder in die Ausgangslage zurückgehen und so eine erneute Schaltzustandsänderung bewirken.

In dieser Weiterbildung ist der Arbeitszylinder insbesondere als doppelt wirkender Arbeitszylinder ausgebildet.

Eine weitere vorteilhafte Ausbildung des Arbeitszylinders sieht vor, dass die Kolbeneinheit mindestens eine umlaufend ausgebildete Radialnut aufweist.

Die Radialnut ist erfindungsgemäß so ausgebildet, dass von dieser der Formkörper der Betätigungseinheit soweit aufnehmbar ist, dass die Betätigungseinheit in die Ausgangslage und damit der Reedschalter in den zweiten Schaltzustand versetzt werden können.

Unter der Voraussetzung, dass bei einer Anwendung des Arbeitszylinders die generelle Bewegungsrichtung der Kolbeneinheit bekannt ist, kann durch das Vorhalten der Radialnut eine differenziertere Bestimmung der Lageposition der Kolbeneinheit durch die Positionserkennungsvorrichtung bereitgestellt werden, indem, in der entsprechenden Lageposition der Kolbeneinheit, der Formkörper von der Radialnut der Kolbeneinheit aufgenommen, der Reedschalter in den zweiten Schaltzustand versetzt wird und so die exakte Position der Kolbeneinheit zu dem Zeitpunkt, in welchem der Reedschalter in den zweiten Schaltzustand versetzt wird, erfasst werden kann.

Vorzugsweise weist die Kolbeneinheit eines erfindungsgemäßen Arbeitszylinders eine Mehrzahl axial voneinander beabstandeter Radialnuten auf, sodass eine Art Rasterung für die Positionserkennungsvorrichtung bereitgestellt wird, welche eine noch genauere Erfassung der Lageposition der Kolbeneinheit ermöglicht.

In einer weiteren vorteilhaften Weiterbildung weist der Arbeitszylinder eine Mehrzahl Positionserkennungsvorrichtungen sowie eine Mehrzahl an Durchsetzungen auf, denen diese Postionserkennungvorrichtungen jeweils zugeordnet sind. Dadurch können besonders vorteilhaft mehrere Lagepositionen der Kolbeneinheit erkannt werden. Durch die Abfolge der Schaltzustandsänderungen des Reedschalters kann auf diese Weise zudem eine Detektion der Bewegungsrichtung der Kolbeneinheit erfolgen.

Bei den mehreren Positionserkennungsvorrichtungen handelt es sich vorliegend um Positionserkennungsvorrichtungen mit den, im Anspruch 1 aufgeführten Merkmalen.

In einer weiteren vorteilhaften Variante des Arbeitszylinders sind die Durchsetzungen und somit die zugeordneten Positionserkennungsvorrichtungen zueinander winkelversetzt angeordnet. Bei einer winkelversetzten Anordnung am Zylinderrohr können geringste axiale Abstände mehrerer Positionserkennungsvorrichtungen bereitgestellt werden, da die Bauräume der mehreren Positionserkennungsvorrichtungen bei einer solchen Anordnung sich nicht überlagern.

Auf diese Weise wird als besonderer Vorteil eine Feinabstufung der Lagepositionserfassungen durch die Positionserkennungsvorrichtungen ermöglicht.

Ein erfindungsgemäßer Arbeitszylinder mit Positionserkennungsvorrichtung wird nachfolgend in Ausführungsbeispielen anhand von
- Fig. 1: Prinzipdarstellung Arbeitszylinder Einfahrlage
- Fig. 2: Prinzipdarstellung Arbeitszylinder Ausfahrlage
- Fig. 3a: Detaildarstellung Positionserkennungsvorrichtung Ausgangslage
- Fig. 3b: Detaildarstellung Positionserkennungsvorrichtung Arbeitslage
- Fig. 4: Prinzipdarstellung Arbeitszylinder mit Radialnuten in Einfahrlage
- Fig. 5: Prinzipdarstellung Arbeitszylinder mit Radialnuten in Ausfahrlage
näher erläutert.

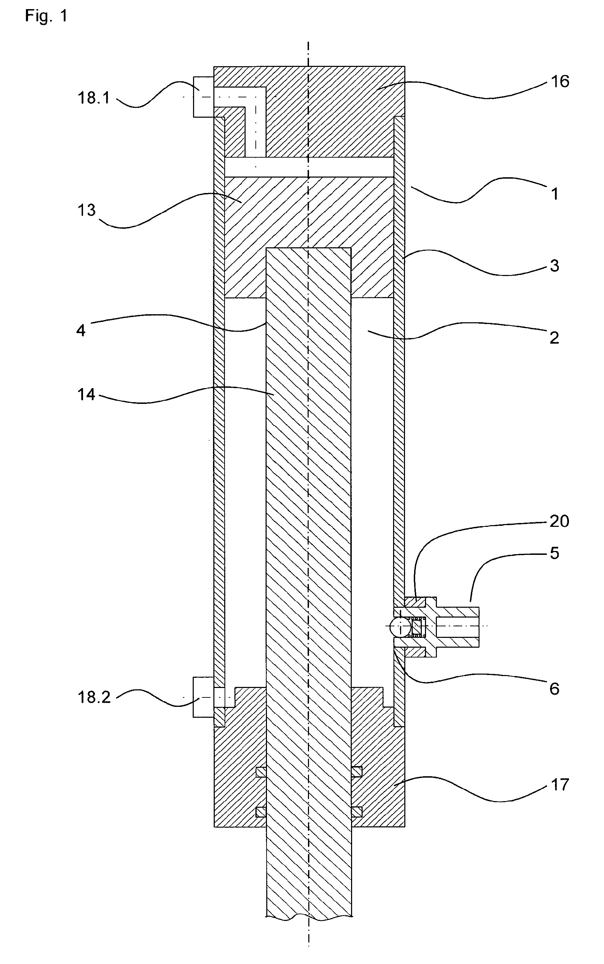

Fig. 1 zeigt eine Prinzipdarstellung eines erfindungsgemäßen Arbeitszylinders. Der Arbeitszylinder weist vorliegend ein Zylinderrohr 1 mit einem Zylinderrohrinnenraum 2 auf, wobei der Zylinderrohrinnenraum 2 durch eine Zylinderrohrwandung 3, sowie durch ein Bodenverschlussteil 16 und ein Führungsverschlussteil 17 begrenzt wird.

In üblicher Weise weist der Arbeitszylinder zudem zwei Druckanschlüsse 18 auf, über welche ein entsprechendes Druckmedium in den Arbeitszylinder einbringbar ist, beziehungsweise aus diesem ausströmen kann.

Der Arbeitszylinder ist im vorliegenden Ausführungsbeispiel als Differentialzylinder ausgebildet und weist ferner eine Kolbeneinheit 4, bestehend aus einem Kolben 13 und einer mit dem Kolben 13 verbundenen Kolbenstange 14, auf, wobei der Kolben 13 in dem Zylinderrohr 1 und die Kolbenstange 14 in dem Führungsverschlussteil 17 geführt werden.

Als weiteren Bestandteil weist der erfindungsgemäße Arbeitszylinder eine Positionserkennungsvorrichtung 5 zur Erfassung der Lageposition der Kolbeneinheit 4 in dem Zylinderrohr 1 auf.

Die Positionserkennungsvorrichtung 5 ist in den Fig. 1, 2, 4 und 5 nur schematisch vereinfacht dargestellt.

Wie Fig. 1 ferner zeigt, weist die Zylinderrohrwandung 3 eine Durchsetzung 6 auf, welcher die Positionserkennungsvorrichtung 5 zugeordnet ist. Die Positionserkennungsvorrichtung 5 wird hierbei erfindungsgemäß abschnittsweise von der Durchsetzung aufgenommen, wobei der Grundkörper 7 der Positionserkennungsvorrichtung 5 vorliegend, beispielsweise über einen Flansch 20 im Bereich der Außenseite der Zylinderrohrwandung 3 mit dem Zylinderrohr 1 verschweißt ist.

Der Arbeitszylinder ist in Fig. 1 in einer Einfahrlage dargestellt, das heißt dass sich die Kolbeneinheit 4 in oder nahe einer Einfahrendlage befindet.

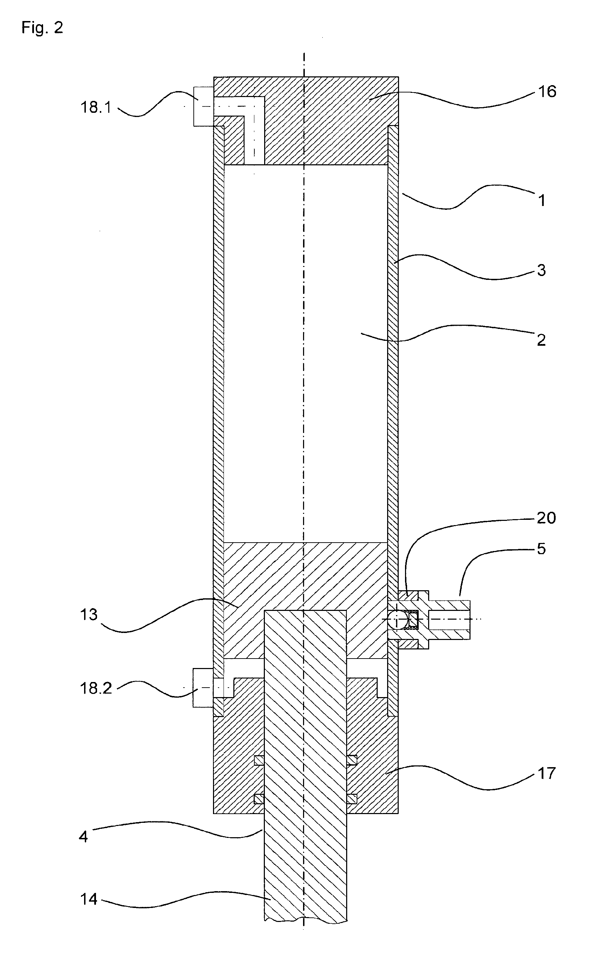

Fig. 2 zeigt den gleichen Arbeitszylinder, jedoch in einer Ausfahrlage, in welcher sich die Kolbeneinheit 4 in einer Ausfahrendlage befindet.

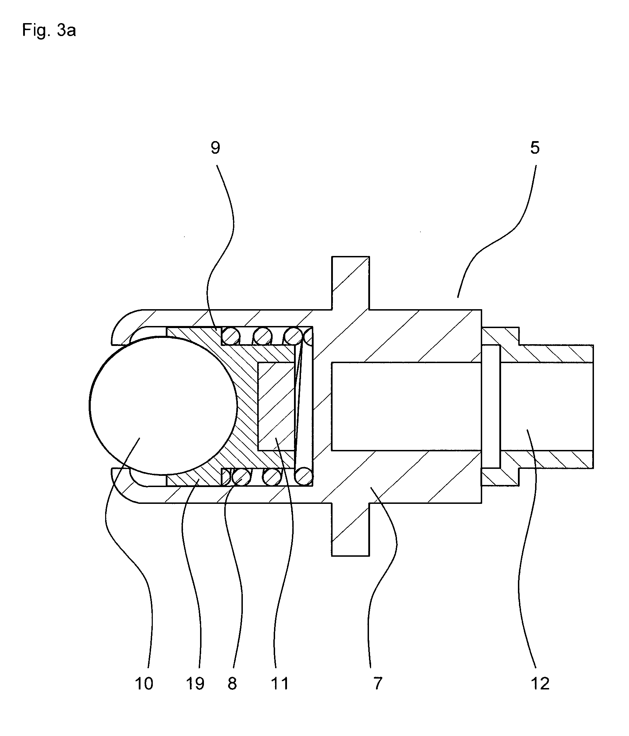

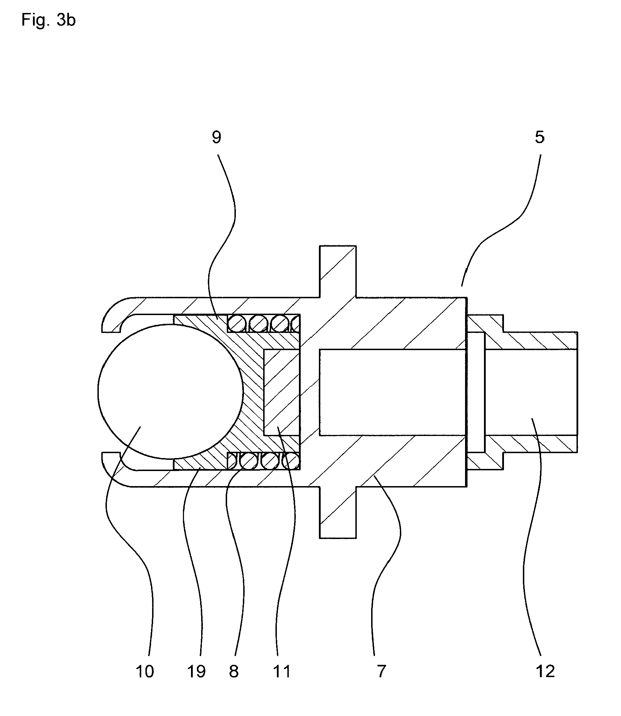

Eine Positionserkennungsvorrichtung 5 eines erfindungsgemäßen Arbeitszylinders ist in den Fig. 3a und 3b detailliert dargestellt.

Die Positionserkennungsvorrichtung weist einen Grundkörper 7 auf, in welchem ein Federelement 8, eine Betätigungseinheit 9 sowie ein Reedschalter 12 aufgenommen sind. Der Reedschalter 12 ist vorliegend stark vereinfacht dargestellt.

Die Betätigungseinheit 9 gliedert sich erfindungsgemäß in einen Formkörper 10 und einen Magneten 11, wobei beide Elemente vorliegend über ein gemeinsames Aufnahmeelement 19 miteinander verbunden sind. Das Aufnahmeelement 19 ist aus einem magnetisch neutralen Material mit geeigneten mechanischen und thermischen Eigenschaften, vorzugsweise aus Polyoxymethylen, ausgebildet.

Ferner ist die Betätigungseinheit 9 erfindungsgemäß mittels des Federelements 8 beweglich in dem Grundkörper 7 angeordnet und dazu in der Lage, eine Ausgangslage und eine Arbeitslage einzunehmen. Durch geeignete konstruktive Maßnahmen werden an der Betätigungseinheit 9 oder an dem Grundkörper 7 Ausgleichskanäle, vorzugsweise Nutungen oder Spaltmaße bereitgestellt, damit das zwischen der Betätigungseinheit 9 und dem Grundkörper 7 in der Ausgangslage eingeschlossene Fluidvolumen bei einem Wechsel in die Arbeitslage abströmen kann.

Fig. 3a zeigt vorliegend die Positionserkennungsvorrichtung 5, wobei die Betätigungseinheit 9 mittels der Federkraft des Federelements 8 in die Ausgangslage versetzt wurde.

Die Ausgangslage der Betätigungseinheit 9 stellt, wie auch Fig. 1 zeigt, den Betriebszustand der Positionserkennungsvorrichtung 5 dar, bei welchem der Formkörper 10 abschnittsweise in den Zylinderrohrinnenraum 2 eintritt. Die maximale Eintrittstiefe in den Zylinderrohrinnenraum 2 wird in diesem Zusammenhang, wie in Fig. 3a dargestellt, durch einen Anschlag des Grundkörpers 7 begrenzt. Demgegenüber zeigt Fig. 3b die Positionserkennungsvorrichtung 5, wobei die Betätigungseinheit 9, entgegen der Federkraft des Federelements 8, in Richtung des Reedschalters 12 verschoben ist und dadurch die Arbeitslage einnimmt.

Die Verschiebung der Betätigungseinheit 9 erfolgt, wie in Fig. 2 dargestellt, erfindungsgemäß durch die Kolbeneinheit 4, wobei vorliegend der Kolben 13, bei einem Überfahren der Durchsetzung 6, den Formkörper 10 aus dem Zylinderrohrinnenraum 2 verdrängt und auf diese Weise die Betätigungseinheit 9 von der Ausgangslage in die Arbeitslage verschoben wird.

In Abhängigkeit der Ausgangs- und Arbeitslage der Betätigungseinheit 9 weist der Reedschalter 12 erfindungsgemäß einen ersten Schaltzustand oder einen zweiten Schaltzustand auf, wobei der erste Schaltzustand in der Arbeitslage der Betätigungseinheit 9 und der zweite Schaltzustand in der Ausgangslage der Betätigungseinheit 9 vorliegen.

Der erste Schaltzustand stellt im Ausführungsbeispiel den Betriebszustand des Reedschalters 12 dar, bei welchem dessen Kontakt durch den Magnetfeldeinfluss des Magneten 11 geschlossen ist und so der Reedschalter 12 aktiviert wird. Im ersten Schaltzustand wird somit vorliegend ein Schaltsignal ausgegeben. Demgegenüber stellt der zweite Schaltzustand vorliegend den Betriebszustand des Reedschalters 12 dar, bei welchem, aufgrund einer ausreichenden Entfernung zu dem Magneten 11, der Kontakt des Reedschalters 12 geöffnet ist und somit der Reedschalter 12 deaktiviert wird.

Im zweiten Schaltzustand wird somit vorliegend kein Steuersignal ausgegeben.

Eine besonders vorteilhafte Ausführungsform des Arbeitszylinders sieht vor, dass die Kolbeneinheit 4 mindestens eine umlaufend ausgebildete Radialnut 15 aufweist.

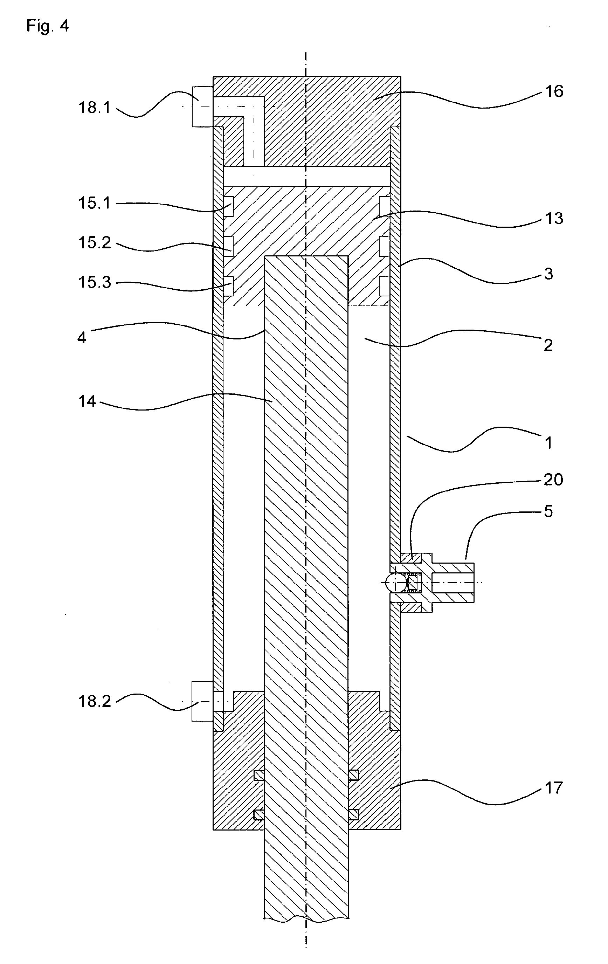

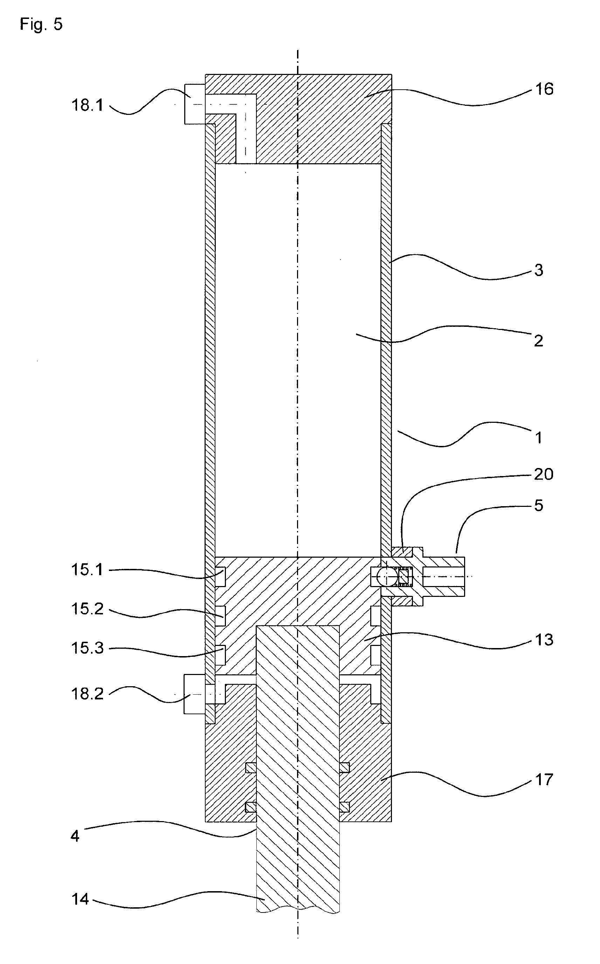

Im Ausführungsbeispiel gemäß Fig. 4 und 5 sind insgesamt drei Radialnuten 15 im Bereich des Kolbens 13 der Kolbeneinheit 4 angeordnet.

Die Radialnuten 15 sind erfindungsgemäß so ausgebildet, dass der Formkörper 10 der Positionserkennungsvorrichtung 5, wie in Fig. 5 dargestellt, durch die Radialnuten 15 abschnittsweise soweit aufgenommen werden kann, dass die Betätigungseinheit 9 in die Ausgangslage bringbar ist und somit der Reedschalter 12 in den zweiten Schaltzustand versetzt und somit deaktiviert wird.

Durch die Radialnuten 15 wird erfindungsgemäß eine Art Rasterung für die Positionserkennungsvorrichtung 5 bereitgestellt, durch welche besonders vorteilhaft die Genauigkeit der Erfassung der Lageposition der Kolbeneinheit 4 verbessert werden kann.

In diesem Zusammenhang kann, bei einer bekannten Bewegungsrichtung der Kolbeneinheit 4, beispielsweise deren Lageposition zu dem Zeitpunkt erfasst werden, in welchem der Formkörper 10 der Positionserkennungsvorrichtung 5 von der zweiten Radialnut 15.2 aufgenommen und die Betätigungseinheit 9 dadurch in die Ausgangslage versetzt und der Reedschalter 12 in den zweiten Schaltzustand versetzt wird.

### Verwendete Bezugszeichen

- 1: Zylinderrohr
- 2: Zylinderrohrinnenraum
- 3: Zylinderrohrwandung
- 4: Kolbeneinheit
- 5: Positionserkennungsvorrichtung
- 6: Durchsetzung
- 7: Grundkörper
- 8: Federelement
- 9: Betätigungseinheit
- 10: Formkörper
- 11: Magnet
- 12: Reedschalter
- 13: Kolben
- 14: Kolbenstange
- 15: Radialnut
- 16: Bodenverschlussteil
- 17: Führungsverschlussteil
- 18: Druckanschlüsse
- 19: Aufnahmeelement
- 20: Flansch

## Patentansprüche

1. Arbeitszylinder,
aufweisend ein Zylinderrohr (1) mit einem Zylinderrohrinnenraum (2), welcher von einer Zylinderrohrwandung (3) begrenzt wird, aufweisend eine Kolbeneinheit (4), sowie aufweisend eine Positionserkennungsvorrichtung (5),
**dadurch gekennzeichnet,**
**dass** die Zylinderrohrwandung (3) eine Durchsetzung (6) aufweist, wobei die Positionserkennungsvorrichtung (5) der Durchsetzung (6) zugeordnet ist, dass die Positionserkennung (5) einen Grundkörper (7), ein Federelement (8), eine Betätigungseinheit (9), aufweisend einen Formkörper (10) und einen Magneten (11), sowie einen Reedschalter (12) aufweist, wobei die Betätigungseinheit (9) mittels des Federelements (8) in dem Grundkörper (7) beweglich angeordnet ist, und wobei in einer Ausgangslage der Betätigungseinheit (8) der Formkörper (10) durch die Durchsetzung (6) abschnittsweise in den Zylinderrohrinnenraum (2) eintritt, dass die Betätigungseinheit (9) durch die Kolbeneinheit (4), bei einem Überfahren der Durchsetzung (6), entgegen der Wirkung des Federelements (8), von der Ausgangslage in eine Arbeitslage bringbar ist, und dass der Reedschalter (12) in der Arbeitslage der Betätigungseinheit (9) einen ersten Schaltzustand und in der Ausgangslage der Betätigungseinheit (9) einen zweiten Schaltzustand aufweist.

2. Arbeitszylinder nach Anspruch 1,
**dadurch gekennzeichnet,**
**dass** der Formkörper (10) als Kugel ausgebildet ist.

3. Arbeitszylinder nach Anspruch 1 oder 2,
**dadurch gekennzeichnet,**
**dass** der Magnet (11) als integraler Bestandteil des Formkörpers (10) ausgebildet ist.

4. Arbeitszylinder nach einem der vorhergehenden Ansprüche,
**dadurch gekennzeichnet,**
**dass** die Kolbeneinheit (4) einen Kolben (13) und eine Kolbenstange (14) aufweist.

5. Arbeitszylinder nach einem der vorhergehenden Ansprüche,
**dadurch gekennzeichnet,**
**dass** die Kolbeneinheit (4) mindestens eine umlaufende Radialnut (15) aufweist, wobei der Formkörper (10) abschnittsweise von der mindestens einen Radialnut (15) aufnehmbar ist.

6. Arbeitszylinder nach einem der vorhergehenden Ansprüche,
**dadurch gekennzeichnet,**
**dass** dieser eine Mehrzahl Positionserkennungsvorrichtungen (5) aufweist und dass die Zylinderrohrwandung (3) eine Mehrzahl Durchsetzungen (6) aufweist, wobei die Durchsetzungen (6) axial versetzt angeordnet sind und wobei jeder Durchsetzung (6) eine Positionserkennungsvorrichtung (5) zugeordnet ist.

7. Arbeitszylinder nach Anspruch 6,
**dadurch gekennzeichnet,**
**dass** die Durchsetzungen (6) mit den jeweils zugeordneten Positionserkennungsvorrichtungen (5) zueinander winkelversetzt angeordnet sind.
